Europäisches Patentamt

European Patent Office

Office européen des brevets

(19)

(11) EP 1 006 087 B1

(12) **EUROPÄISCHE PATENTSCHRIFT**

(45) Veröffentlichungstag und Bekanntmachung des Hinweises auf die Patenterteilung:
04.06.2003 Patentblatt 2003/23

(51) Int Cl.⁷: $C03C\ 1/02$, $C03B\ 32/00$

(21) Anmeldenummer: 99123835.3

(22) Anmeldetag: 01.12.1999

(54) **Verfahren für die Reinigung von SiO2-Körnung und Vorrichtung zur Durchführung des Verfahrens**

Method for purifying SiO2 granules and apparatus for carrying out the process

Méthode de purification de granules de SiO2 et dispositif pour la mise en oeuvre de la méthode

(84) Benannte Vertragsstaaten:
DE FR GB

(30) Priorität: 03.12.1998 DE 19855816

(43) Veröffentlichungstag der Anmeldung:
07.06.2000 Patentblatt 2000/23

(73) Patentinhaber: Heraeus Quarzglas GmbH & Co. KG
63450 Hanau (DE)

(72) Erfinder: **Schultheis, Andreas**
63505 Langenselbold (DE)

(56) Entgegenhaltungen:
EP-A- 0 737 653  DD-A- 242 570
DE-A- 19 813 971  DE-C- 3 321 589

- PATENT ABSTRACTS OF JAPAN vol. 006, no. 202 (C-129), 13. Oktober 1982 (1982-10-13) & JP 57 111224 A (DENKI KAGAKU KOGYO KK), 10. Juli 1982 (1982-07-10)
- DATABASE WPI Section Ch, Week 199342 Derwent Publications Ltd., London, GB; Class M22, AN 1993-335391 XP002131777 & SU 1 770 024 A (LIVESTOCK & FODDER EQUIP TECHN PRODN), 23. Oktober 1992 (1992-10-23)

EP 1 006 087 B1

**Beschreibung**

Die vorliegende Erfindung betrifft ein Verfahren für die Reinigung von $SiO_2$-Körnung, durch Erhitzen einer Verunreinigungen enthaltenden $SiO_2$-Körnung auf eine Temperatur, bei der die Verunreinigungen erweichen oder mit $SiO_2$-Körnung Schmelzagglomerate bilden, und Separieren von Verunreinigungen und $SiO_2$-Körnung. Weiterhin betrifft die Erfindung eine Vorrichtung zur Durchführung des Verfahrens.

Ein gattungsgemäßes Verfahren für die Reinigung von Quarzsand und eine Vorrichtung zur Durchführung des Verfahrens sind in der DE-C1 33 21 589 beschrieben. Für die Abtrennung mineralischer Verunreinigungen in Quarzsand, die beispielsweise als Verwachsungen von Feldspat oder Granat mit Quarzkörnern vorliegen, wird vorgeschlagen, eine Siebfraktion des Quarzsandes von 180 µm bis 250 µm in einem elektrisch beheizten Drehrohrofen mit einem Drehrohr aus SiC auf eine Temperatur von 1370 °C zu erhitzen. Aufgrund dieser Wärmebehandlung, die über eine Dauer von 30 Minuten durchgeführt wird, erweichen die Verunreinigungen, so daß sie untereinander oder mit Quarzkörnern Schmelzagglomerate bilden. Demgegenüber erweichen die Quarzkörner selbst nicht, so daß diese ihre ursprüngliche Größe und Morphologie im wesentlichen beibehalten. Nach dem Abkühlen werden die Schmelzagglomerate abgesiebt oder durch Windsichten vom gereinigten Quarzsand separiert.

Dieses Verfahren ermöglicht die chargenweise Reinigung von Quarzsand von Verunreinigungen, unter den Voraussetzungen, daß sich die Verunreinigungen in Schmelzagglomeraten binden, und daß die Schmelzagglomerate größer sind als die eingesetzte Siebfraktion der Quarzkörnung. Es hat sich jedoch gezeigt, daß diese Voraussetzungen nicht immer erfüllt sind und daß darüberhinaus die Schmelzagglomerate mechanisch instabil sind und beim Separationsprozeß wieder leicht zerfallen und daher durch Sieben oder Windsichten nicht ohne weiteres vom Quarzsand entfernt werden können.

Bei vielen Anwendungen von $SiO_2$-Pulver, beispielsweise als Ausgangsmaterial für Quarzglasbauteile zum Einsatz bei der Halbleiterherstellung oder für die Optik, werden an die Reinheit der Ausgangsmaterialien besonders hohe Anforderungen gestellt, die mit dem bekannten Verfahren nur unter großem Zeit-, Material- und Kostenaufwand zu erreichen sind. Um während des Reinigungsprozesse Verunreinigungen durch Abrieb zu vermeiden, sind hochreine, und teilweise hochtemperaturfeste, kostspielige Vorrichtungteile erforderlich, wie beispielsweise Drehrohre aus SiC.

Bei einem für eine kontinuierliche Reinigung von Quarzpulver geeigneten Reinigungsverfahren, das in der EP-A1 737 653 beschrieben ist, werden einige dieser Nachteile vermieden. Das zu reinigende Quarzpulver mit einer mittleren Korngröße im Bereich von 106 µm bis 250 µm wird kontinuierlich einem elektrisch beheizten Drehrohrofen aus Quarzglas zugeführt, in dem es nacheinander eine Vorheizkammer, eine Reaktionskammer und eine Gas-Desorptionskammer durchläuft. In der Vorheizkammer wird das Quarzpulver auf ca. 800 °C erwärmt, und anschließend in der Reaktionskammer bei einer Temperatur um 1300 °C mit einem Gasgemisch aus Chlor und Chlorwasserstoff behandelt. Dabei reagieren Alkali- und Erdalkaliverunreinigungen des Quarzpulvers mit dem chlorhaltigen Gasgemisch unter Bildung gasförmiger Metallchloride. Das Behandlungsgas und die gasförmigen Reaktionsprodukte werden anschließend abgesaugt.

Auf diese Art und Weise lassen sich vorallem solche Verunreinigungen entfernen, die durch Heißchlorierung in die Gasphase überführt werden können. So wird durch das bekannte Verfahren eine deutliche Reduzierung an Alkali- und Erdalkaliverunreinigungen im Quarzpulver erreicht. Für Verunreinigungen, die sich nicht durch Chlorieren entfernen lassen, ist das Verfahren jedoch ungeeignet. Darüberhinaus hängt bei der Reinigungsgrad von der Reaktionsdauer des Quarzpulvers mit dem chlorhaltigen Gasgemisch und von der Reaktionstemperatur ab. Bei höheren Temperaturen reagiert Chlor schneller mit den metallischen Verunreinigungen ab, so daß mit steigender Temperatur ein besserer Reinigungseffekt zu erwarten wäre. Allerdings neigt erweichte Körnung zur Agglomeratbildung, was den freien Zutritt des Behandlungsgases zur Oberfläche der einzelnen Körner erschwert und die Reinigungswirkung des Behandlungsgases verringert.

Der vorliegenden Erfindung liegt daher die Aufgabe zugrunde, ein Verfahren für die Reinigung von $SiO_2$-Körnung anzugeben, mit dem bei vergleichsweise geringem Zeit-, Material- und Kostenaufwand hohe Reinheiten der Körnung erreicht werden, und eine für die Durchführung des Verfahrens geeignete, einfache Vorrichtung bereitzustellen.

Hinsichtlich des Verfahrens wird diese Aufgabe ausgehend von dem eingangs beschriebenen Reinigungsverfahren erfindungsgemäß dadurch gelöst, daß die $SiO_2$-Körnung einem auf eine Prallfläche gerichteten Gasstrom zugeführt, darin erhitzt und in Richtung auf die Prallfläche beschleunigt wird, derart, daß erweichte Verunreinigungen oder Schmelzagglomerate an der Prallfläche haften und die gereinigte $SiO_2$-Körnung von der Prallfläche entfernt wird.

Die $SiO_2$-Körnung kann aus natürlichem, kristallinem Quarz bestehen oder aus Quarzglas-Körnung. die wiederum aus natürlichem Quarz oder aus synthetischen Ausgangsstoffen hergestellt sein kann. Bei den Verunreinigungen der $SiO_2$-Körnung kann es sich um mineralische Substanzen handeln, wie sie üblicherweise in natürlichem Quarz enthalten sind, oder um Substanzen, die bei der Aufbereitung der Rohstoffe oder im Verlaufe einer Weiterbearbeitung in die Körnung eingeschleppt werden, beispielsweise durch Abrieb.

$SiO_2$-Körnung aus kristallinem Quarz schmilzt bei ca. 1700 °C, während amorpher $SiO_2$-Körnung kein defi-

nierter Schmelzpunkt zugeordnet werden kann, sondern mit zunehmender Temperatur ein allmähliches Abnehmen der Viskosität beobachtet wird. Die Schmelzpunkte reiner mineralischer Verunreinigungen oder von metallischem Abrieb, wie beispielsweise Stahl, liegen üblicherweise bei Temperaturen unterhalb von 1500 °C. Durch Mischbildung oder Legierungsbildung der Verunreinigungen mit Substanzen aus der $SiO_2$-Körnung können die Schmelz- oder Erweichungstemperaturen noch etwas niedriger liegen.

Die Verunreinigungen enthaltende $SiO_2$-Körnung wird dem Gasstrom zugeführt und darin auf eine Temperatur erhitzt, bei der die Verunreinigungen erweichen, worunter auch ein Schmelzen verstanden wird, oder bei der die Verunreinigungen mit $SiO_2$-Körnung erweichte Schmelzagglomerate bilden. Im folgenden werden geschmolzene oder erweichte Verunreinigungen und Verunreinigungen enthaltende Schmelzagglomerate als "erweichte Verunreinigungspartikel" bezeichnet. Mittels des Gasstromes wird die Körnung mitsamt den erweichten Verunreinigungspartikeln auf die Prallfläche geschleudert. Da beim erfindungsgemäßen Verfahren die Körnung ohne Kontakt mit Ofenwandungen im Gasstrom erhitzt und geführt wird, ist ein Ankleben der Körnung an Ofenwandungen nicht zu befürchten und es entfallen andere Randbedingungen für den Reinigungsprozeß, wie die Abriebfestigkeit oder Temperaturbeständigkeit eines Ofenmaterials. Die Körnung kann daher auf sehr hohe Temperaturen erhitzt werden, bei denen auch solche Verunreinigungen erweichen, aufschmelzen oder Schmelzagglomerate bilden, die aufgrund ihrer hohen Schmelz- oder Erweichungstemperaturen durch das gattungsgemäße Verfahren nicht entfernt werden können.

Die Separation der Verunreinigungen von der restlichen Körnung beruht darauf, daß die erweichten Verunreinigungspartikel oder wenigstens ein Teil davon, an der Prallfläche haftet, jedoch keine reine $SiO_2$-Körnung, oder nur wenig davon. Entscheidend für den Separationsgrad ist der Unterschied zwischen den Haftfähigkeiten von erweichten Verunreinigungspartikeln einerseits und reiner $SiO_2$-Körnung andererseits an der Prallfläche. Die jeweiligen Haftfähigkeiten wiederum hängen im wesentlichen von der Viskosität unmittelbar vor der Prallfläche ab. Die beste Haftfähigkeit ist im allgemeinen in einem Viskositätsbereich mit teigiger Konsistenz zu erwarten. Im Idealfall bleiben alle erweichten Verunreinigungspartikel an der Prallfläche haften, aber keine reine $SiO_2$-Körnung. Daher ist die $SiO_2$-Körnung im Bereich der Prallfläche nicht oder nur geringfügig erweicht.

Die nicht haftende $SiO_2$-Körnung wird nach dem Auftreffen von der Prallfläche von dort entfernt. Im einfachsten Fall geschieht dies durch die Schwerkraft, indem die $SiO_2$-Körnung im rechten Winkel auf die Prallfläche auftreffend nach unten fällt. Die Prallfläche kann aber auch in Bezug auf die Bewegungsrichtung der $SiO_2$-Körnung geneigt angeordnet sein, so daß sie die Bewegung der $SiO_2$-Körnung nicht stoppt, sondern deren Bewegungsrichtung lediglich umlenkt. Insbesondere im letztgenannten Fall kann für die Separation bereits eine vorübergehende und lose Haftung der erweichten Verunreinigungspartikel an der Prallfläche ausreichen, wenn sich nach der Haftung die weitere Bewegung der erweichten Verunreinigungspartikel hinsichtlich Geschwindigkeit und/oder Richtung gegenüber der Bewegung der $SiO_2$-Körnung unterscheidet.

Im Vergleich zum gattungsgemäßen Verfahren, erlaubt das berührungslose Erhitzen gemäß der Erfindung die Einstellung höherer Erweichungstemperaturen. Somit werden auch Verunreinigungen mit hohen Schmelz- und Erweichungstemperaturen erfaßt, und zwar weitgehend unabhängig von der Größe der erweichten Verunreinigungspartikel und Schmelzagglomerate oder deren mechanischer Stabilität. Dabei ermöglicht das erfindungsgemäße Verfahren auch die Entfernung nicht oder kaum chlorierbarer Verunreinigungen.

Vorteilhafterweise wird eine Prallfläche aus Quarzglas eingesetzt. Quarzglas zeichnet sich durch hohe mechanische Festigkeit und Temperaturwechselbeständigkeit aus. Die Abgabe von Verunreinigungen aus einer Quarzglas-Prallfläche an die $SiO_2$-Körnung ist vernachlässigbar.

Als besonders geeignet hat sich eine Prallfläche, deren Oberfläche eine mittlere Rauhtiefe $R_a$ von 0,5 µm oder mehr aufweist. Die Rauhigkeit verbessert den Separationsgrad, indem sie die Haftfähigkeit für die erweichten Verunreinigungspartikel erhöht, während sie die Haftung der nicht oder nur geringfügig erweichten $SiO_2$-Körnung kaum beeinflußt. Der Wert für die Rauhtiefe $R_a$ wird entsprechend DIN 4768 ermittelt.

Es wird eine Verfahrensweise bevorzugt, bei der die Prallfläche temperiert wird. Durch die Temperierung kann der Separationsgrad weiter verbessert werden. Die Prallfläche wird während des Reinigungsprozesses auf einer Temperatur gehalten, bei der die erweichten Verunreinigungspartikel an der Prallfläche möglichst optimal haften, während die $SiO_2$-Körnung daran abprallt. Die Temperierung kann auch ein Ablösen erstarrender Verunreinigungspartikel von der Prallfläche wegen beiderseits unterschiedlicher Wärmeausdehnungen verhindern.

Vorteilhafterweise wird die Prallfläche senkrecht zur Richtung des Gasstromes bewegt. Dadurch kann frische Prallfläche bereitgestellt werden, sobald deren Wirkung durch anhaftende Schmelzagglomerate nachläßt. Die Prallfläche kann kontinuierlich oder schrittweise bewegt werden. Die Bewegungsrichtung verläuft senkrecht zur Ausbreitungsrichtung des Gasstromes, damit die Wegstrecke des Gasstromes bis zur Prallfläche vor und nach der Bewegung gleich lang ist.

Als vorteilhaft hat es sich erwiesen, die Temperatur der $SiO_2$-Körnung im Bereich der Prallfläche auf einen Wert im Bereich zwischen 1000 °C und 2200 °C einzustellen. Diese Temperaturangaben, die sich auf die Oberfläche der Körnung beziehen, dienen nur als ungefähre Anhaltswerte. Denn der Erweichungsgrad der Körnung hängt nicht nur von der Temperatur, sondern beispielsweise auch von der Größe der $SiO_2$-Körner und von der Erhitzungsdauer ab. Bei hohen Temperaturen erweichen auch Verunreinigungspartikel mit hohen Schmelzpunkten, die mit dem gattungsgemäßen Reinigungsverfahren aufgrund der begrenzten Temperaturbeständigkeit des Drehrohrofens nicht erfaßt werden. Zwar kann es bei Temperaturen oberhalb von etwa 1800 °C zu einem oberflächlichen Aufschmelzen oder Erweichen der SiO$_2$-Körnung kommen, was aber lediglich eine meist erwünschte Sphäroidisierung der SiO$_2$-Körnung bewirkt. Ein Verkleben der Körnung wird durch ein feinteiliges Dispergieren im Gasstrom und durch ein Abkühlen und ausreichendes Verfestigen der Oberfläche vor einem Kontakt mit der Prallfläche verhindert. Die Einstellung derart hoher Behandlungstemperaturen ist bei dem erfindungsgemäßen Verfahren dadurch möglich, daß die Körnung im Gasstrom erhitzt wird, ohne daß dabei gleichzeitig Teile der Reinigungsvorrichtung gleichermaßen hoch erhitzt werden müssen.

Die Reinigungswirkung des erfindungsgemäßen Reinigungsverfahrens wird noch verstärkt, indem die SiO$_2$-Körnung in den Gasstrom fein verteilt eingebracht wird. Das Einbringen in den Gasstrom kann beispielsweise durch Einstreuen oder Einsprühen erfolgen. Ein Vorteil bei dieser Verfahrensweise liegt darin, daß die SiO$_2$-Körnung im Gasstrom feinverteilt - "dispergiert" - vorliegt und dadurch Agglomerationen von SiO$_2$-Körnung verhindert werden. Derartige Agglomerationen werden bei dem eingangs beschriebenen Heißchlorierungsverfahren beobachtet, wenn die im Drehrohrofen erweichten SiO$_2$-Körner beginnen, aneinander zu haften. Der Reinigungseffekt des Behandlungsgases wird dadurch verringert. Demgegenüber können durch ein Dispergieren, insbesondere durch Einstreuen oder Einsprühen der SiO$_2$-Körner in den Gasstrom die Körner getrennt voneinander auf hohe Temperaturen erhitzt und dabei erweicht werden, ohne daß sie aneinander haften. Das Dispergieren im Gasstrom erlaubt es daher, alle Körner gleichermaßen und darüberhinaus besonders hohen Temperaturen auszusetzen. Die Reinigungswirkung wird dadurch nicht nur besser, sondern durch die Vermeidung von Agglomeraten auch reproduzierbarer.

Bevorzugt enthält der Gasstrom ein halogenhaltiges Behandlungsgas. Das halogenhaltige Behandlungsgas unterstützt die Reinigungswirkung des Verfahrens, indem solche Verunreinigungen, die mit Halogenen flüchtige Reaktionsprodukte bilden, noch wirksamer entfernt werden. Als halogenhaltiges Behandlungsgas kommen die Elemente Fluor, Chlor, Brom, Jod, gasförmige chemische Verbindungen dieser Elemente und Gemische der Elemente und Verbindungen in Frage.

Als besonders vorteilhaft hat sich eine Verfahrensweise erwiesen, bei der dem Gasstrom ein Brenngas mit einer wasserstoffhaltigen Komponente umfaßt, die unter Bildung einer Brenngasflamme, der die SiO$_2$-Körnung kontinuierlich zugeführt wird, verbrannt wird. Dabei wird die SiO$_2$-Körnung einer Brenngasflamme ausgesetzt, darin erhitzt und gleichzeitig vorgereinigt. Das Erhitzen der Körnung erfolgt durch die Reaktionswärme bei der Verbrennung der wasserstoffhaltigen Komponente des Brenngases. Unter Verbrennung wird dabei jede Form einer exothermen, schnellen Oxidation der wasserstoffhaltigen Komponente verstanden, die ein Erhitzen der Körnung ermöglicht. Als wasserstoffhaltige Komponente kommen beispielsweise Wasserstoff oder Kohlenwasserstoffverbindungen, wie Propan oderAcetylen in Frage. Als Reaktionspartner für die Verbrennung der wasserstoffhaltigen Komponente können beispielsweise Sauerstoff, Sauerstoffverbindungen, Halogene und Halogenverbindungen eingesetzt werden. Durch eine halogenhaltige Komponente des Brenngases wird eine zusätzliche Reinigungswirkung erzielt. Mittels der Brenngasflamme sind höhere Temperaturen einstellbar und sie erlaubt schnelle Temperaturwechsel. Die SiO$_2$-Körnung kann in der Brenngasflamme daher schnellen Temperaturwechseln ausgesetzt und dadurch schlagartig erhitzt werden. Dabei können SiO$_2$-Körner zerplatzen, und zwar in erster Linie solche Körner, die innere Spannungen aufgrund von Vorschädigungen und struktureller Defekte aufweisen. Ursache für derartige Defekte sind häufig Fremdatome. Die Fremdatome gelangen durch das Zerplatzen der Körner an die freie Oberfläche, von wo sie dann durch Erweichen und Separation mittels Haftung an der Prallfläche, als auch - begünstigt durch die hohen Temperaturen - durch Abreaktion mit halogenhaltigen Komponenten des Gasstromes, leicht entfernt werden können.

Das erfindungsgemäße Verfahren ermöglicht eine kontinuierliche Reinigung, indem die SiO$_2$-Körnung dem Gasstrom kontinuierlich zugeführt wird.

Es hat sich als günstig erwiesen, dem Gasstrom erwärmte SiO$_2$-Körnung zuzuführen. Dadurch verkürzt sich die zum Erweichen der Verunreinigungen erforderliche Zeitspanne.

Zur Lösung der oben angegebenen Aufgabe hinsichtlich der Vorrichtung zur Durchführung des Verfahrens ist die Vorrichtung erfindungsgemäß mit einem Brenner versehen, in den ein Brenngas, mittels dem eine Brenngasflamme erzeugt wird, eingespeist wird, und mit einer Zuführvorrichtung, mittels der Verunreinigungen enthaltende SiO$_2$-Körnung der Brenngasflamme zugeführt wird, und mit einer Prallfläche, auf die die Brenngasflamme gerichtet ist, wobei die Prallfläche in Bezug auf die Richtung der Brenngasflamme geneigt oder schiefwinklig verläuft oder wobei die Prallfläche senkrecht steht und in Bezug auf die Richtung der Brenngasflamme rechtwinklig verläuft.

Die mittels des Brenners erzeugte Brenngasflamme dient zum Erhitzen der SiO$_2$-Körnung. Hierzu wird die Verunreinigungen enthaltende SiO$_2$-Körnung der Brenngasflamme mittels der Zuführvorrichtung zugeführt und darin auf eine Temperatur erhitzt, bei der die Verunreinigungen erweichte Verunreinigungspartikel bilden. Die SiO$_2$-Körnung kann der Brenngasflamme durch den Brenner zugeführt werden. Gegebenenfalls ist der Brenner mit der Zuführvorrichtung verbunden und weist eine entsprechende Brennerdüse für die SiO$_2$-Körnung auf. Das Zuführen der Körnung kann aber auch ein Einstreuen umfassen, wobei dann die Zuführvorrichtung als Schüttvorrichtung ausgebildet ist. Das

EP 1 006 087 B1

Zuführen der SiO$_2$-Körnung kann auch unter Einsprühen oder Einspritzen erfolgen, wobei in diesen Fällen die Zuführvorrichtung eine Druckvorrichtung zur Erzeugung eines Über- oder Unterdruckes und eine Düse umfaßt. Wesentlich ist, daß mittels der Zuführvorrichtung die SiO$_2$-Körnung der Brenngasflamme zugeführt und darin dispergiert werden kann.

Weiterhin zeichnet sich die erfindungsgemäße Vorrichtung durch eine Prallfläche aus, auf die die Brenngasflamme gerichtet ist. Im einfachsten Fall ist die Prallfläche eben ausgebildet. Sie kann aber auch andere Formen aufweisen, beispielsweise kann die Prallfläche gewölbt oder mit Oberflächenstrukturen versehen sein. Mittels der Brenngasflamme wird die Körnung ohne Kontakt mit irgendwelchen Ofenwandungen erhitzt und anschließend mitsamt den erweichten Verunreinigungspartikeln auf die Prallfläche geschleudert. Ein Ankleben der Körnung an Ofenwandungen ist daher nicht zu befürchten und es entfallen Randbedingungen, wie die Abriebfestigkeit oder Temperaturbeständigkeit eines Ofenmaterials. Die erfindungsgemäße Vorrichtung kann somit besonders einfach ausgebildet sein. Die Körnung wird berührungslos auf sehr hohe Temperaturen erhitzt, bei denen auch solche Verunreinigungen erweichen, aufschmelzen oder Schmelzagglomerate bilden, die aufgrund ihrer hohen Schmelz- oder Erweichungstemperaturen mittels der gattungsgemäßen Vorrichtung nicht entfernt werden können.

Hinsichtlich der Separation der Verunreinigungen von der restlichen Körnung durch Haftung an der Prallfläche, deren Wirkung und deren Anordnung in Bezug auf die Bewegungsrichtung der SiO$_2$-Körnung wird auf die obigen Erläuterungen zum erfindungsgemäßen Verfahren verwiesen.

Vorteilhafterweise besteht die Prallfläche aus Quarzglas. Quarzglas zeichnet sich durch hohe mechanische Festigkeit und Temperaturwechselbeständigkeit aus. Die Abgabe von Verunreinigungen durch Abrieb aus der Quarzglas-Prallfläche ist vernachlässigbar.

Als besonders geeignet hat sich eine Prallfläche erwiesen, deren Oberfläche eine mittlere Rauhtiefe R$_a$ von 0,5 µm oder mehr aufweist. Die Rauhigkeit verbessert den Separationsgrad, indem sie die Haftfähigkeit für die erweichten Verunreinigungspartikel erhöht, während sie die Haftung der nicht oder nur geringfügig erweichten SiO$_2$-Körnung kaum beeinflußt.

Als günstig hat sich eine Prallfläche herausgestellt, deren Flächennormale in Bezug auf die Richtung der Brenngasflamme geneigt ist oder schiefwinklig verläuft. Durch eine derartige Ausrichtung der Prallfläche in Bezug auf die Ausbreitungsrichtung der Brenngasflamme, und damit auch in Bezug auf die Bewegungsrichtung der SiO$_2$-Körnung, kann die Separation der Verunreinigungen von der SiO$_2$-Körnung beeinflußt werden. Im einfachsten Fall trifft die SiO$_2$-Körnung im rechten Winkel auf die Prallfläche auf und wird danach von der Prallfläche entfernt, indem die SiO$_2$-Körnung nach unten fällt, beispielsweise in einen unterhalb der Prallfläche angeordneten Sammelbehälter. Dabei können aber auch von der Prallfläche herabfallende Verunreinigungen in den Sammelbehälter geraten. Dies kann durch eine geneigte Prallfläche verhindert werden, bei der die Bewegung der SiO$_2$-Körnung nicht gestoppt, sondern deren Bewegungsrichtung umgelenkt wird, so daß sich die Körnung an einer Stelle ansammelt, an die keine von der Prallfläche abfallende Verunreinigungen gelangen können. Darüberhinaus kann die Neigung der Prallfläche in Bezug auf die Bewegungsrichtung der SiO$_2$-Körnung auch die Hafteigenschaften von SiO$_2$-Körnung und erweichten Verunreinigungspartikeln beeinflußt werden.

Bevorzugt wird eine Variante der erfindungsgemäßen Vorrichtung, bei der die Prallfläche mit einer Tempereireinrichtung verbunden ist. Mittels der Tempereireinrichtung kann die Prallfläche auf eine Solltemperatur erwärmt, gekühlt, oder auf der Solltemperatur gehalten werden.

Hinsichtlich der Ausführung einer Neigung der Prallfläche in Bezug auf die Bewegungsrichtung der SiO$_2$-Körnung und der daraus resultierenden Vorteile wird auf die obigen Erläuterungen zum erfindungsgemäßen Verfahren verwiesen. Als günstig hat sich eine Prallfläche herausgestellt, die durch eine Orthogonale definiert ist, die in Bezug auf die Richtung des Gasstromes geneigt ist oder schiefwinklig verläuft. In einer einfachen Ausführungsform der erfindüngsgemäßen Vorrichtung ist die Prallfläche kippbar ausgebildet, so daß der Kippwinkel hinsichtlich der Separation und der Hafteigenschaften leicht verstellt und optimiert werden kann.

Besonders einfach gestaltet sich eine Ausführungsform der erfindungsgemäßen Vorrichtung, bei der als Brenner ein ChlorChlor-Knallgasbrenner eingesetzt ist. Mittels der Chlor-Knallgasflamme sind hohe Temperaturen von mehr als 1300 °C ohne weiteres erreichbar. Darüberhinaus trägt das Chlor zur Reinigungswirkung bei, wie dies oben anhand des erfindungsgemäßen Verfahrens näher erläutert ist.

Im Hinblick auf die Vermeidung von Verunreinigungen durch Abrieb oder chemischen Abtrag bestehen Brenner und/oder Zuführvorrichtung vorteilhafterweise aus Quarzglas.

Als günstig hat sich erwiesen, die Zuführvorrichtung mit einer auf die SiO$_2$-Körnung einwirkenden Heizeinrichtung zu versehen. Mittels der Heizeinrichtung kann die SiO$_2$-Körnung vorgewärmt werden, was die erforderliche Verweilzeit der Körnung in der Brenngasflamme verkürzen kann. Dies ist vorallem dann von Vorteil, wenn der Abstand zwischen Brenngasflamme und Prallfläche kurz ist.

Nachfolgend wird die Erfindung anhand von Ausführungsbeispielen und anhand einer Patentzeichnung näher beschrieben. In der Zeichnung zeigen im einzelnen in schematischer Darstellung:

**Figur 1:** eine erste Ausführungsform der erfindungsgemäßen Vorrichtung in einer Seitenansicht, und

**Figur 2:** eine weitere Ausführungsform der erfindungsgemäßen Vorrichtung in einer teilweise dreidimensionalen Ansicht.

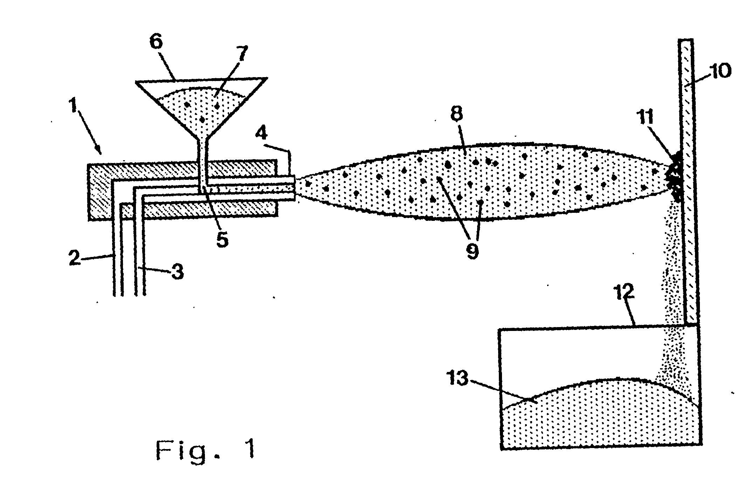

Die in **Figur 1** dargestellte Ausführungsform der erfindungsgemäßen Vorrichtung weist einen Gasbrenner 1 aus Quarzglas auf, der eine äußere Gasdüse 2 für Wasserstoff aufweist, die eine innere Gasdüse 3 für Sauerstoff als Ringspalt koaxial umgibt. Die äußere Gasdüse 2 und die innere Gasdüse 1 münden im Bereich des Brennerkopfes 4 außerhalb des Brenners, wo die Brenngase Wasserstoff und Sauerstoff exotherm unter Bildung einer Knallgasflamme 8 miteinander reagieren.

In die innere Gasdüse 3 mündet innerhalb des Gasbrenners 1 ein Quarzglas-Einfülltrichter 6, über den dem Gasbrenner 1 kontinuierlich zu reinigende Quarzkörnung 7 zugeführt wird. Die Strömung der Brenngase erzeugt im Bereich der Mündung 5 des Eingabetrichters einen Unterdruck nach Art einer Venturi-Düse, aufgrund dem die Quarzkörnung 7 mitgerissen, der Knallgasflamme 8 zugeführt und darin erhitzt wird. Die Knallgasflamme 8 ist auf eine Quarzglasplatte 10 gerichtet, an der die erweichten Verunreinigungspartikel 9 als allmählich erstarrende Schmelzschicht 11 haften bleiben, während sich die reinen $SiO_2$-Partikel in einem unterhalb der Quarzglasplatte 10 angeordneten Sammelbehälter 12 als gereinigte Quarzkörnung 13 ansammeln. Die Dicke der Quarzglasplatte 10 beträgt 1 cm und die der Knallgasflamme 8 zugewandte Oberfläche weist eine mittlere Rauhtiefe $R_a$ von etwa 2 μm auf. Die Oberflächenrauhigkeit verbessert die Haftung der erweichten Verunreinigungspartikel 9.

Im folgenden wird ein Ausführungsbeispiel für das erfindungsgemäße Verfahren anhand der in Figur 1 schematisch dargestellten Vorrichtung näher beschrieben:

Dem Brenner 1 werden 2 mol/min Wasserstoff und 1,1 mol/min Sauerstoff zugeführt. Sauerstoff und Wasserstoff reagieren exotherm in einer Knallgasreaktion unter Bildung der Knallgasflamme 8 miteinander. Im Ausführungsbeispiel stellt sich in der Knallgasflamme 8 eine Maximaltemperatur um 2300°C ein.

Bei der zu reinigenden Quarzkörnung 7 handelt es sich um Körnung aus natürlich vorkommendem, kristallinem Quarz. Die mittlere Korngröße ($D_{50}$-Wert) der Quarzkörnung 7 liegt bei ca. 180 μm; sie enthält neben Alkali- und Erdalkali-Verunreinigungen in Form von Silikaten und Oxiden, auch Mangan- und Aluminiumverbindungen, wie beispielsweise Granate und Glimmer, sowie Verbindungen sogenannter Buntmetalle wie Fe, Cu, Ni, und Cr. Die Verunreinigungen liegen im allgemeinen in Form von Mineralien vor, deren Schmelz- oder Erweichungstemperaturen im Bereich unterhalb von 1500 °C liegen. Aus der 3. Zeile der nachfolgenden Tabelle 1 sind die Anfangskonzentrationen an Verunreinigungselementen in Gewichts-ppb, und aus der 4. Zeile die Konzentrationen derselben Verunreinigungen nach einmaligem Durchlaufen des erfindungsgemäßen Reinigungsverfahrens zu entnehmen.

Tabelle 1:

| Verunreinigungen der Quarzkörnung | | | | | | | | | | | |
|---|---|---|---|---|---|---|---|---|---|---|---|
| Körnung | Verunreinigungen in Gew.-ppb | | | | | | | | | | |
| | **Na** | **K** | **Li** | **Mg** | **Ca** | **Al** | **Fe** | **Cu** | **Ni** | **Cr** | **Mn** |
| vorher | 1100 | 1050 | 710 | 32 | 370 | 16.000 | 410 | 9.5 | 7.2 | 14.0 | 110 |
| nachher | <50 | <50 | <350 | 32 | 100 | <16.000 | <50 | <1 | <1 | <1 | <30 |

Die Temperaturen und Verweilzeiten der Quarzkörnung 7 in der Knallgasflamme 8 sind so eingestellt. daß die Verunreinigungen enthaltenden Partikel erweichen, jedoch nicht die reinen $SiO_2$-Partikel. Die Konzentrationen der Verunreinigungen in der Quarzkörnung 7 liegen üblicherweise im Gew.-ppm- oder Gew.-ppb-Bereich, wie aus Tabelle 1 ersichtlich. Zur Verdeutlichung sind die Verunreinigungspartikel 9 in Figur 1 übertrieben groß und zahlreich dargestellt. Der Durchsatz für die zu reinigende Quarzkörnung 7 durch den Brenner 1 wird auf etwa 60 g/min eingestellt. Die Quarzkörnung 7 ist in der Knallgasflamme 8 fein verteilt und wird darin schlagartig erhitzt. Größere Körner und solche Körner, die innere Defekte aufweisen, zerplatzen dabei, so daß eingeschlossene Verunreinigungen freigelegt werden, was deren Eweichen in der Knallgasflamme 8 erleichtert.

Der Abstand zwischen Brenner 1 und Quarzglasplatte 10 ist auf 0,5 m eingestellt. Daraus resultiert eine Verweilzeit der Quarzkörnung 7 in der Knallgasflamme 8 von deutlich weniger als einer Sekunde. Aufgrund der hohen Temperaturen reicht die kurze Verweilzeit jedoch für das Eweichen der meisten Verunreinigungen und ihrer chemischen Verbindungen aus.

Die Separation der gereinigten Quarzkörnung 12 von den Verunreinigungen erfolgt dadurch, daß die erweichten Verunreinigungspartikel 9 überwiegend an der Quarzglasplatte 10 haften bleiben, jedoch nicht die reinen $SiO_2$-Partikel. Ein Sieben oder Sichten - wie beim gattungsgemäßen Verfahren - ist nicht erforderlich. Das erfindungsgemäße Reinigungsverfahren wirkt daher im wesentlichen unabhängig von der Größe der Verunreinigungspartikel 9; es werden auch besonders kleine und besonders große Verunreinigungspartikel 9 erfaßt. Erstere können beim gattungsgemäßen Verfahren nicht ohne weiteres entfernt werden, da sie beim Absieben der Schmelzagglomerate nicht im Siebrückstand bleiben; letztere bereiten beim Heißchlorieren Probleme, da Diffusions- und Reaktionsvorgänge bei großen Partikeln sehr lange Behandlungszeiten erfordern. Darüberhinaus erfaßt das erfindungsgemäße Verfahren aufgrund der hohen Temperaturen in der Knallgasflamme 8 auch Verunreinigungen mit hohen Erweichungsoder Schmelztemperaturen, und es wirkt auch bei solchen Verunreinigungen, wie dem Granat "Andradit" ($Ca_3Fe_2[SiO_2]_3$, die sich durch Heißchlorieren nicht ohne weiteres entfernen lassen. Ein mittels des erfindungsgemäßen Verfahrens erzielter Reinheitsgrad der Quarzkörnung 7 nach einem ersten Durchlauf ist aus der letzten Zeile von Tabelle 1 ersichtlich.

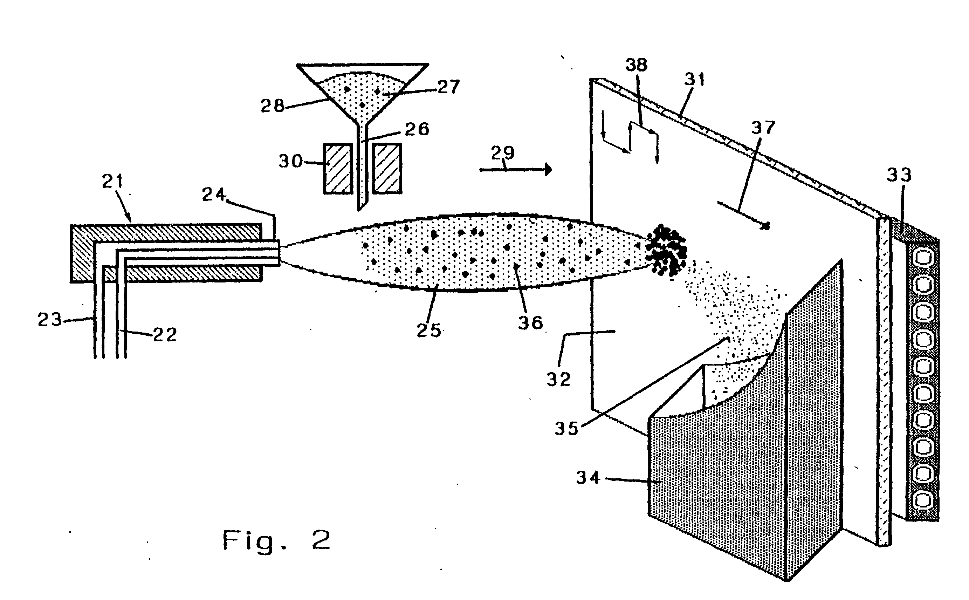

Bei der Ausführungsform der Vorrichtung gemäß **Figur 2** ist die Bezugsziffer 21 insgesamt einem Chlor-Knallgas-Brenner zugeordnet. Der Chlor-Knallgas-Brenner 21 ist mit einem Gaseinlaß 22 für Chlor und einem weiteren Gaseinlaß 23 für Wasserstoff versehen. Chlor und Wasserstoff treten aus voneinander getrennten Brennerdüsen aus dem Brennerkopf 24 aus und reagieren in einer exothermen ChlorChlor-Knallgasreaktion unter Bildung von HCI in einer Chlor-Knallgasflamme 25 miteinander. Die Strömungsrichtung der aus dem Brennerkopf 24 austretenden Gasströmung ist mit dem Richtungspfeil 29 angedeutet. Oberhalb der Chlor-Knallgasflamme 25 mündet ein Schüttrüssel 26, der mit einem Vorratsbehälter 28 für Quarzkörnung 27 verbunden ist. Mittels des Schüttrüssels 26 wird die Quarzkörnung 27 im wesentlichen senkrecht zur Strömungsrichtung 29 in die Chlor-Knallgasflamme 25 eingestreut.

Der Schüttrüssel 26 ist von einem ringförmigen Propanbrenner 30. umgeben, mittels dem die Quarzkörnung 27 vor dem Einstreuen in die Chlor-Knallgasflamme 25 auf eine Temperatur von etwa 1000 °C erwärmt wird.

Die Chlor-Knallgasflamme 25 ist auf eine ebene Quarzglasplatte 31 gerichtet, die gegenüber der Strömungsrichtung 29 der Brenngase schräg angeordnet ist, so daß ihre Oberfläche mit der Ausbreitungsrichtung der Chlor-Knallgasflamme 25 einen Winkel von 80 ° einschließt. Die der Chlor-Knallgasflamme 25 zugewandte Vorderseite 32 der Quarzglasplatte 31 weist eine mittlere Rauhtiefe Ra von 3 μm auf. Die Quarzglasplatte 31 wird mittels eines Infrarot-Flächenstrahlers 33 auf einer Temperatur von etwa 800 °C gehalten. Im Bereich der Vorderseite 32 der Quarzglasplatte 31 ist eine Auffangwanne 34 für gereinigte Quarzkörnung 35 vorgesehen. Brenner 21, Schüttrüssel 26, Vorratsbehälter 28 und Auffangwanne 34 bestehen jeweils aus Quarzglas.

Der Abstand zwischen Brenner 21 und Quarzglasplatte 31 ist auf 0,75 m eingestellt. Daraus resultiert eine Verweilzeit der Quarzkömung 27 in der Chlor-Knallgasflamme 25 von deutlich weniger als einer Sekunde. Aufgrund der hohen Temperaturen reicht die kurze Verweilzeit jedoch für ein Erweichen der meisten Verunreinigungen und ihrer chemischen Verbindungen aus.

Die Quarzglasplatte 31 wird kontinuierlich in der durch die Richtungspfeile 38 angedeuteten Art und Weise mäanderförmig senkrecht zur Strömungsrichtung 29 bewegt, wobei die Bewegungsgeschwindigkeit 3cm/h beträgt.

In Anlehnung an die weiter oben erläuterte Verfahrensweise wird im folgenden ein weiteres Ausführungsbeispiel für das erfindungsgemäße Verfahren anhand der in Figur 2 schematisch dargestellten Reinigungsvorrichtung näher beschrieben:

Dem Brenner 1 werden 4 mol/min Wasserstoff und 4,2 mol/min Chlor zugeführt. Chlor und Wasserstoff reagieren exotherm in einer Chlor-Knallgasreaktion gemäß der chemischen Reaktionsgleichung

$$H_2 + Cl_2 \rightarrow 2\,HCl \tag{1}$$

unter Bildung der Chlor-Knallgasflamme 25 miteinander. Die Reaktionsenthalpie der Chlor-Knallgasreaktion beträgt 241,98 kJ. Im Ausführungsbeispiel resultiert dies in einer Temperatur der Chlor-Knallgasflamme 25 von etwa 1800°C. Dadurch, daß Chlor in Bezug auf die Reaktionsgleichung (1) dem Brenner 21 im stöchiometrischen Überschuß zugeführt wird, wird die vollständige Verbrennung des Wasserstoffs sichergestellt und die Chlor-Knallgasflamme 25 enthält neben HCl auch freies Chlor. Darüberhinaus bilden sich in der Chlor-Knallgasflamme 25 besonders reaktive Chlorradikale. Diese Gasgemisch in der Chlor-Knallgasflamme 25 wird im folgenden als Reinigungsgas bezeichnet.

Mittels des Schüttrüssels 26 wird die vorgewärmte Quarzkörnung 27 kontinuierlich und fein verteilt in die Chlor Knallgasflamme 25 eingestreut und dabei durch die Strömung der Brennergase in Richtung der Quarzglasplatte 31 beschleunigt. Das Vorwärmen der Quarzkörnung 27 mittels des Propanbrenners 30 erlaubt eine vergleichsweise höhere Zuführrate zur Chlor-Knallgas- flamme 25. Im Ausführungsbeispiel beträgt die Zuführrate 60 g/min. In der Chlor-Knallgasflamme 25 wird die Quarzkörnung 27 schlagartig erhitzt, wodurch größere Körner und solche Körner, die innere Defekte aufweisen, zerplatzen. Im Korn eingeschlossene Verunreinigungen werden dabei freigelegt, so daß das Reinigungsgas auf die feinkörnige und fein verteilte Quarzkörnung 27 einwirken kann, wobei feste oxidische Verunreinigungen in die entsprechenden flüchtigen Chloride umgewandelt werden. Diese Wirkung des Reinigungsgases wird durch die hohe Temperatur der Chlor-Knallgasflamme 25 gefördert. Darüberhinaus erweichen die Verunreinigungen unter Bildung erweichter Verunreinigungspartikel 36, die sich infolge der Strömung der Brenngase in Form einer allmählich erstarrenden Schmelzschicht 38 auf der Quarzglasplatte 31 niederschlagen. Durch die mäanderförmige Bewegung der Quarzglasplatte 31, wie durch die Richtungspfeile 38 angedeutet, wird kontinuierlich frische Oberfläche bereitgestellt.

Hinsichtlich der Separation der an der Quarzplatte 31 haftenden Verunreinigungspartikel 36 von der übrigen Quarzkörnung 27 wird auf die obigen Erläuterungen zu Figur 1 verwiesen. Eine Besonderheit des Verfahrens hinsichtlich der Separation ergibt sich durch die schräge Anordnung der Quarzglasplatte 31 in Bezug auf die Bewegungsrichtung 29 der $SiO_2$-Körnung 27. Diese Anordnung bewirkt, daß nicht haftende $SiO_2$-Körner infolge ihrer Trägheit noch eine gewisse Strecke entlang der Vorderseite 32 der Quarzglasplatte 31 geführt werden, wie dies durch den Richtungspfeil 37 schematisch dargestellt ist. Die gereinigte $SiO_2$-Körnung 27 sammelt sich deshalb nicht direkt unterhalb der Schmelzschicht 38, sondern in einem von der Schmelzschicht 38 entfernten Bereich, wo sie von der Auffangwanne 34 aufgenommen wird. Durch diese Maßnahme wird einerseits die Haftfähigkeit der $SiO_2$-Körnung 27 an der Quarzglasplatte 31 herabgesetzt, andererseits wird ausgeschlossen, daß Verunreinigungspartikel 36, die sich möglicherweise von der Quarzglasplatte 31 ablösen in die Auffangwanne 34 gelangen.

Eine weitere Besonderheit gegenüber der in zuerst beschriebenen Verfahrensweise ergibt sich durch die Temperierung der Quarzglasplatte 31 mittels des Flächenstrahlers 33. Diese Maßnahme trägt einerseits zur Verbesserung der Haftung der Verunreinigungspartikel 36 bei, andererseits wird dadurch ein vollständiges Abkühlen der Schmelzschicht 38 verhindert. Das vollständige Abkühlen der Schmelzschicht 38 könnte zu einer Ablösung von Verunreinigungspartikeln 36 infolge ihrer im Vergleich zu Quarzglas größeren oder kleineren Wärmeausdehnung, und damit zu einem Einschleppen von Verunreinigungen in die Auffangwanne 34 führen.

**Patentansprüche**

1. Verfahren für die Reinigung von $SiO_2$-Körnung, durch Erhitzen einer Verunreinigungen enthaltenden $SiO_2$-Körnung auf eine Temperatur, bei der die Verunreinigungen erweichen oder mit $SiO_2$-Körnung Schmelzagglomerate bilden, und Separieren von Verunreinigungen und $SiO_2$-Körnung, **dadurch gekennzeichnet, daß** die $SiO_2$-Körnung (7; 27) einem auf eine Prallfläche (10; 31) gerichteten Gasstrom (8; 25) zugeführt, darin erhitzt und in Richtung auf die Prallfläche (10; 31) beschleunigt wird, derart, daß erweichte Verunreinigungen (9; 36) oder Schmelzagglomerate an der Prallfläche (10; 31) haften und gereinigte $SiO_2$-Körnung (13; 35) von der Prallfläche (10; 31) entfernt wird.

2. Verfahren nach Anspruch 1, **dadurch gekennzeichnet, daß** eine Prallfläche (10; 31) aus Quarzglas eingesetzt wird.

3. Verfahren nach Anspruch 1 oder 2, **dadurch gekennzeichnet, daß** eine Prallfläche (10; 31) eingesetzt wird, deren Oberfläche eine mittlere Rauhtiefe Ra ermittelt nach DIN 4768 von 0,5 µm oder mehr aufweist.

4. Verfahren nach einem der vorhergehenden Ansprüche, **dadurch gekennzeichnet, daß** die Prallfläche (10; 31) temperiert wird.

5. Verfahren nach einem der vorhergehenden Ansprüche, **dadurch gekennzeichnet**, die Prallfläche (10; 31) senkrecht zur Richtung des Gasstromes (8; 25) bewegt wird.

6. Verfahren nach einem der vorhergehenden Ansprüche, **dadurch gekennzeichnet, daß** die Temperatur der $SiO_2$-Körnung (7; 27) im Bereich der Prallfläche (10; 31) auf einen Wert im Bereich zwischen 1000 °C und 2200 °C eingestellt wird.

7. Verfahren nach einem der vorhergehenden Ansprüche, **dadurch gekennzeichnet, daß** die $SiO_2$-Körnung (7; 27) in den Gasstrom (8; 25) feinverteilt eingebracht wird.

8. Verfahren nach einem der vorhergehenden Ansprüche, **dadurch gekennzeichnet, daß** der Gasstrom (25) ein halogenhaltiges Behandlungsgas enthält.

9. Verfahren nach einem der vorhergehenden Ansprüche, **dadurch gekennzeichnet, daß** der Gasstrom ein Brenngas mit einer wasserstoffhaltigen Komponente umfaßt, die unter Bildung einer Brenngasflamme (8; 25), der die $SiO_2$-Körnung (7; 27) kontinuierlich zugeführt wird, verbrannt wird.

10. Verfahren nach einem der vorhergehenden Ansprüche, **dadurch gekennzeichnet, daß** die $SiO_2$-Körnung (7; 27) dem Gasstrom (8; 25) kontinuierlich zugeführt wird.

**11.** Verfahren nach einem der vorhergehenden Ansprüche, **dadurch gekennzeichnet, daß** dem Gasstrom (25) erwärmte $SiO_2$-Körnung (27) zugeführt wird.

**12.** Vorrichtung zur Durchführung des Verfahrens nach einem der vorhergehenden Ansprüche 1 bis 11 mit einem Brenner (1; 21), in den ein Brenngas, mittels dem eine Brenngasflamme (8; 25) erzeugt wird, eingespeist wird, und mit einer Zuführvorrichtung (6; 26; 28), mittels der Verunreinigungen enthaltende $SiO_2$-Körnung (7; 27) dem Brenngas oder der Brenngasflamme (8; 25) zugeführt wird, und mit einer Prallfläche (10; 31), auf die die Brenngasflamme (8; 25) gerichtet ist, wobei die Prallfläche (10; 31) in Bezug auf die Richtung (29) der Brenngasflamme (8; 25) geneigt oder schiefwinklig verläuft, oder wobei die Prallfläche senkrecht steht und in Benzug auf die Richtung der Brenngasflamme rechtwinklig verläuft.

**13.** Vorrichtung nach Anspruch 12, **dadurch gekennzeichnet, daß** die Prallfläche (10; 31) aus Quarzglas besteht.

**14.** Vorrichtung nach einem der Ansprüche 12 oder 13, **dadurch gekennzeichnet, daß** die Prallfläche (10;13) eine Oberfläche mit einer mittleren Rauhtiefe Ra ermittelt nach DIN 4768 von 0,5 µm oder mehr aufweist.

**15.** Vorrichtung nach einem der vorhergehenden Vorrichtungsansprüche, **dadurch gekennzeichnet, daß** der Brenner (21) ein Chlor-Knallgasbrenner ist.

**16.** Vorrichtung nach einem der vorhergehenden Vorrichtungsansprüche, **dadurch gekennzeichnet, daß** Brenner (1; 21) und/oder Zuführvorrichtung (6; 26; 28) aus Quarzglas bestehen.

**17.** Vorrichtung nach einem der vorhergehenden Vorrichtungsansprüche, **dadurch gekennzeichnet, daß** die Zuführvorrichtung (26; 28) mit einer auf die $SiO_2$-Körnung (27) einwirkenden Heizeinrichtung (30) versehen ist.

**Claims**

**1.** A method for the purification of $SiO_2$ granules by heating $SiO_2$ granules containing impurities to a temperature at which the impurities are softened or form molten agglomerates with $SiO_2$ granules, and separating of the impurities from the $SiO_2$ granules, wherein the $SiO_2$ granules (7; 27) are supplied to a gas flow (8; 25) directed to an impinging surface (10; 31), heated in the gas flow and accelerated in the direction towards the impinging surface (10; 31) such that softened impurities (9; 36) or melted agglomerates adhere at the impinging surface (10; 31) and purified $SiO_2$ granules (13; 35) are removed from the impinging surface (10; 31).

**2.** A method as claimed in claim 1, wherein an impinging surface (10; 31) made of silica glass is used.

**3.** A method as claimed in claim 1 or 2, wherein an impinging surface (10; 31) is used whose surface has an average surface roughness Ra of 0,5 µm or more determined according to DIN 4768.

**4.** A method as claimed in one of the aforementioned claims, wherein the impinging surface (10; 31) is tempered.

**5.** A method as claimed in one of the aforementioned claims, wherein the impinging suface (10; 31) is moved vertically to the direction of the gas flow (8; 25).

**6.** A method as claimed in one of the aforementioned claims, wherein the temperature of the $SiO_2$ granules (7; 27) in the region of the impinging surface (10; 31) is adjusted to a value in the range between 1000 °C and 2200 °C.

**7.** A method as claimed in one of the aforementioned claims, wherein the $SiO_2$ granules (7; 27) are supplied finely divided to the gas flow (8; 25).

**8.** A method as claimed in one of the aforementioned claims, wherein the gas flow (25) contains a halogen containing treating gas.

**9.** A method as claimed in one of the aforementioned claims, wherein the gas flow comprises a fuel gas having a hydrogen containing component which is burned by forming a fuel gas flame (8; 25) to which the $SiO_2$ granules (7; 27) are continuously supplied.

**10.** A method as claimed in one of the aforementioned claims, wherein the $SiO_2$ granules (7; 27) are continuously supplied to the gas flow (8; 25).

**11.** A method as claimed in one of the aforementioned claims, wherein heated $SiO_2$ granules (27) are supplied to the gas flow (25).

**12.** A device for using the method as claimed in one of the aforementioned claims 1 to 11 comprising a burner (1; 21) to which a fuel gas is supplied by means of which a fuel gas flame (8; 25) is generated, and comprising a feeding device (6; 26; 28) by means of which impurity containing $SiO_2$ granules (7; 27) are supplied to the fuel gas or the fuel gas flame (8; 25), and comprising an impinging surface (10, 31) at which the fuel gas flame (8; 25) is directed, whereby related to the direction (29) of the fuel gas flame (8; 25) the impinging surface (10; 31) is inclined or oblique-angled, or whereby the impinging surface is placed vertically and related to the direction of the fuel gas flame it has a vertical position.

**13.** A device as claimed in claim 12, wherein the impinging surface (10; 31) is made of silica glass.

**14.** A device as claimed in one of the claims 12 or 13, wherein the impinging surface (10; 13) has an average surface roughness Ra of 0,5 μm or more determined according to DIN 4768.

**15.** A device as claimed in one of the aforementioned device claims, wherein the burner (21) is a chlorine detonating gas burner.

**16.** A device as claimed in one of the aforementioned device claims, wherein the burner (1; 21) and / or feeding device (6; 26; 28) are made of silica glass.

**17.** A device as claimed in one of the aforementioned device claims, wherein the feeding device (26; 28) is provided with a heating element (30) which affects the $SiO_2$ granules (27).

## Revendications

**1.** Procédé pour la purification de granulés $SiO_2$ par chauffage de granulés $SiO_2$ contenant des impuretés à une température où les impuretés ramollissent ou forme avec les granulés de $SiO_2$ des agglomérats fondus, et par séparation d'impuretés et des granulés $SiO_2$, **caractérisé en ce que** les granulés $SiO_2$ (7; 27) sont amenés à un courant de gaz (8; 25) dirigé sur une surface d'impact (10; 31), y sont chauffés et sont projetés en direction de la surface d'impact (10; 31), de telle sorte que des impuretés ramollies (9; 36) ou des agglomérats fondus adhèrent à la surface d'impact (10; 31) et les granulés purifiés de $SiO_2$ (13, 35) sont éliminés de la surface d'impact (10; 31).

**2.** Procédé selon la revendication 1, **caractérisé en ce qu'**une surface d'impact (10; 31) en verre de quartz est utilisée.

**3.** Procédé selon la revendication 1 ou 2, **caractérisé en ce qu'**une surface d'impact (10; 31) est utilisée dont la surface présente une rugosité moyenne Ra supérieure ou égale 0,5 μm définie selon la norme DIN 4768.

**4.** Procédé selon l'une des revendications précédentes, **caractérisé en ce que** la surface d'impact (10; 31) est tempérée.

**5.** Procédé selon l'une des revendications précédentes **caractérisé en ce que** la surface d'impact (10; 31) est déplacée perpendiculairement à la direction du courant de gaz (8; 25).

**6.** Procédé selon l'une des revendications précédentes **caractérisé en ce que** la température du grain de $SiO_2$ (7; 27) est réglée dans la zone de la surface d'impact (10; 31) à une valeur comprise entre 1000°C et 2200°C.

**7.** Procédé selon l'une des revendications précédentes **caractérisé en ce que** les granulés de $SiO_2$ (7; 27) sont amenés dans le courant de gaz (8; 25) en fine répartition.

**8.** Procédé selon l'une des revendications précédentes **caractérisé en ce que** le courant de gaz (25) comprend un gaz de traitement halogéné.

9. Procédé selon l'une des revendications précédentes **caractérisé en ce que** le courant de gaz comprend un gaz de combustion avec un composant contenant de l'hydrogène qui est brûlé en formant une flamme de gaz de combustion (8; 25) à laquelle est amené en continu le granulé de $SiO_2$ (7, 27).

10. Procédé selon l'une des revendications précédentes, **caractérisé en ce que** les granulés $SiO_2$ (7; 27) sont amenés en continu au courant de gaz (8; 25).

11. Procédé selon l'une des revendications précédentes **caractérisé en ce que** les granulés chauffés de $SiO_2$ (27) sont amenés au courant de gaz (25).

12. Dispositif pour la mise en oeuvre selon l'une des revendications précédentes 1 à 11 avec un brûleur (1; 21) dans lequel est alimenté un gaz de combustion au moyen duquel est générée une flamme de gaz de combustion (8; 25) et avec un dispositif d'amenée (6; 26; 28) au moyen duquel des granulés de $SiO_2$ (7; 27) contenant des impuretés sont amenés au gaz de combustion ou à la flamme de gaz de combustion (8; 25) et avec une surface d'impact (10; 31) sur laquelle est dirigée la flamme de gaz de combustion (8; 25), la surface d'impact (10; 31) s'étendant inclinée ou en angle incliné par rapport à la direction (29) de la flamme de gaz de combustion (8; 25), ou la surface d'impact étant perpendiculaire et s'étendant en angle droit par rapport à la direction de la flamme de gaz de combustion.

13. Dispositif selon la revendication 12, **caractérisé en ce que** la surface d'impact (10; 31) se compose de verre de quartz.

14. Dispositif selon l'une des revendications 12 ou 13, **caractérisé en ce que** la surface d'impact (10; 13) présente une rugosité moyenne Ra supérieure ou égale 0,5 $\mu$m définie selon la norme DIN 4768.

15. Dispositif selon l'une des revendications précédentes, **caractérisé en ce que** le brûleur (21) est un brûleur au gaz explosif de chlore.

16. Dispositif selon l'une des revendications précédentes, **caractérisé en ce que** les brûleurs (1; 21) et/ou les dispositifs d'amenée (6; 26; 28) se composent de verre de quartz.

17. Dispositif selon l'une des revendications précédentes, **caractérisé en ce que** le dispositif d'amenée (26; 28) est muni d'un dispositif de chauffage (30) agissant sur les granulés de $SiO_2$ (27).

Fig. 1

Fig. 2

EP 1 006 087 B1